Europäisches Patentamt

European Patent Office

Office européen des brevets

(19)

(11) Numéro de publication: **0 037 345**

**A1**

(12) # DEMANDE DE BREVET EUROPEEN

(21) Numéro de dépôt: **81400523.7**

(22) Date de dépôt: **01.04.81**

(51) Int. Cl.³: **E 04 H 6/00**

(30) Priorité: **02.04.80 FR 8007501**

(43) Date de publication de la demande:
**07.10.81 Bulletin 81/40**

(84) Etats contractants désignés:
**AT BE CH DE FR GB IT LI LU NL SE**

(71) Demandeur: **Guibert, Philippe**
**2, Place des Magnolias**
**F-77680 Roissy-en-Brie(FR)**

(71) Demandeur: **Chardon, André Marie**
**Aux amphores Courcelles**
**F-89570 Neuvy-Sautour(FR)**

(72) Inventeur: **Guibert, Philippe**
**2, Place des Magnolias**
**F-77680 Roissy-en-Brie(FR)**

(72) Inventeur: **Chardon, André Marie**
**Aux amphores Courcelles**
**F-89570 Neuvy-Sautour(FR)**

(74) Mandataire: **Bruder, Michel**
**10,rue de la Pépinière**
**F-75008 Paris(FR)**

(54) **Coffre pour la protection d'objets de taille importante.**

(57) Un coffre pour la protection d'objets de taille importante, tels que des engins de plein air, cycles, motocycles, planche à voile, etc..., comporte, sur sa face antérieure, une porte (6) donnant accès à l'intérieur du coffre et, à sa partie inférieur, un plancher (7) sur lequel reposent le ou les objets devant être protégés.

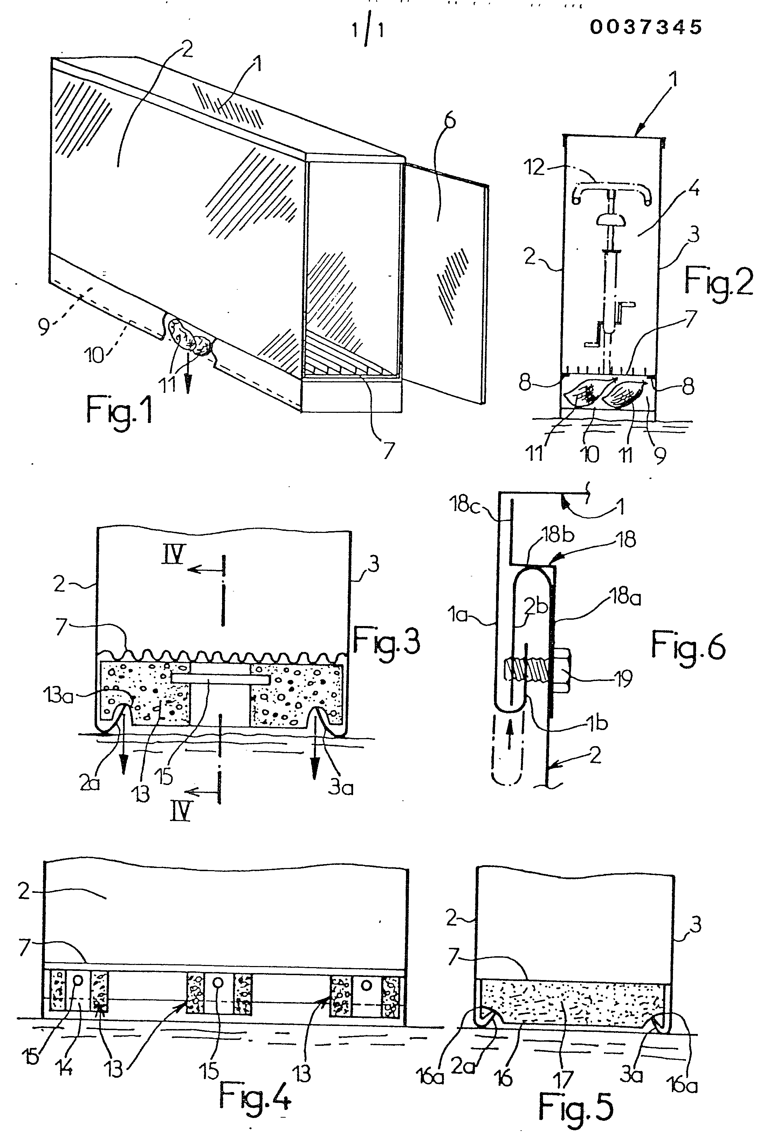

Pour empêcher que ce coffre puisse être aisément enlevé avec le ou les objets qu'il contient, il est prévu, sous le plancher (7), un compartiment (9) dans lequel est logée une masse pesante (11) dont le poids est reporté sur les parois du coffre, pour augmenter considérablement le poids total du coffre et empêcher toute manutention aisée de celui-ci. (Figure 1).

Fig.1

1

La présente invention concerne un coffre pour la protection d'objets de taille importante et plus particulièrement d'engins de plein air tels que cycles, motocycles, planches à voile, accessoires de bateau.

Les cycles et motocycles peuvent être protégés contre le vol au moyen de divers dispositifs à câble, à chaîne, à blocage de direction mais ces dispositifs n'empêchent pas en fait le vol, si le voleur est bien outillé, ou les détériorations partielles de l'engin.

Pour remédier à cet inconvénient on a déjà envisagé de réaliser un coffre de protection constituant en quelque sorte un garage dans lequel peuvent être rangés les cycles et motocycles. Un tel conteneur est décrit dans le brevet français N° 77 21031. Ce conteneur comporte un caisson dont la face antérieure est fermée par une ou plusieurs portes rabattables, permettant d'avoir accès à l'intérieur et d'y loger les engins devant être protégés à l'encontre du vol et des intempéries. La fermeture est assurée au moyen d'une serrure de préférence incrochetable.

Un tel coffre-conteneur ne garantit toutefois pas l'impossibilité d'un vol car l'ensemble du coffre, avec l'engin qu'il contient, peut être aisément transporté de nuit, étant donné son faible poids. Il est certes possible de fixer solidement le coffre au sol, par des organes d'ancrage, mais dans ce cas il ne présente aucune souplesse d'utilisation puisqu'il reste fixé à demeure toujours au même endroit.

La présente invention vise à remédier à ces inconvénients en procurant un coffre de protection de conception particulièrement simple, pouvant être aisément déplacé en vue d'une utilisation en différents endroits et qui ne peut pas être déplacé sans faire appel à des engins de manutention spéciaux, une fois mis en place.

A cet effet, ce coffre pour la protection d'objets de taille importante, tels que des engins de plein air, cycles, motocycles, planche à voile etc, comportant, sur sa face antérieure, une porte donnant accès à l'intérieur du coffre et, à sa partie inférieure, un plancher sur lequel reposent le ou les objets devant être protégés, est caractérisé en ce qu'il comprend en outre, sous le plancher, un compartiment dans lequel est logée une masse pesante dont le poids est reporté sur les parois du coffre, pour augmenter considérablement le poids total du coffre et empêcher toute manutention aisée de celui-ci.

Le coffre de protection suivant l'invention peut avoir toute forme désirée,appropriée à la forme des objets qu'il doit contenir. Il peut être notamment parallélépipédique, cette forme convenant tout

particulièrement pour pouvoir y loger des cycles et motocycles ou même des planches à voile. Il peut être réalisé en n'importe quelle matière appropriée, en matière plastique armée ou non, en métal, en bois etc.

Le lest logé dans le compartiment inférieur peut être constitué d'éléments discontinus tels que bloc, plaques, sacs remplis de matière pesante ou bien encore, suivant une variante, il peut être formé par une masse continue d'un matériau disposnible dans l'environnement du coffre, tel que terre, sable, gravier. Le lest est mis en place dans le compartiment inférieur du coffre, une fois celui-ci monté sur le sol, dans le fond du coffre avant la mise en place du plancher inférieur et du couvercle supérieur.

Le coffre selon l'invention est avantageusement réalisé en kit, les éléments constitutifs étant livrés plats et montés sur le lieu d'utilisation.

On décrira ci-après, à titre d'exemple non limitatif, diverses formes d'exécution de la présente invention en référence au dessin annexé sur lequel :

La figure 1 est une vue en perspective d'un coffre de protection suivant l'invention.

La figure 2 est une vue en coupe verticale et transversale du coffre de la figure 1.

La figure 3 est une vue en coupe verticale et transversale d'une variante d'exécution de la partie inférieure du coffre.

La figure 4 est une vue en coupe verticale et longitudinale faite suivant la ligne IV-IV de la figure 3.

La figure 5 est une vue en coupe verticale et transversale d'une variante d'exécution de la partie inférieure du coffre.

La figure 6 est une vue en coupe verticale partielle d'un dispositif de fixation du couvercle du coffre.

Le coffre de protection représenté sur les figures 1 et 2 a une forme générale parallélépipédique et il comporte un couvercle supérieur 1, deux parois longitudinales et verticales 2 et 3, un fond postérieur 4 et une face antérieure sur laquelle est montée pivotante une porte 6 assurant la fermeture du coffre.

A l'intérieur le coffre comporte un plancher 7, constitué de préférence par une tôle, lequel est maintenu à une certaine distance au-dessus du sol. Cette tôle 7 peut être simplement posée sur des appuis latéraux 8, solidaires des parois longitudinales 2 et 3 (fig.2). En dessous du plancher 7 est prévu un compartiment inférieur 9 dans lequel est logée une masse pesante formant lest. Cette masse pesante repose sur un fond horizontal 10 solidaire des deux parois longitudinales et verticales 2 et 3. Dans l'exemple représenté sur les figures 1 et 2 le lest est constitué de sacs 11 contenant une matière pesante, par exemple du sable ou de la terre.

Une fois le coffre monté et avant la mise en place définitive du couvercle 1, on charge le lest 11 dans le compartiment inférieur 9, en le faisant reposer sur le fond inférieur 10, puis on met en place au-dessus le plancher 7. Ce plancher peut être plan ou encore ondulé de manière à former des rainures parallèles facilitant l'introduction des objets dans le coffre. Cette disposition est particulièrement intéressante lorsque le coffre est destiné à contenir une bicyclette 12 ainsi qu'il est indiqué schématiquement sur la figure 2, cette bicyclette étant ainsi guidée par les ondulations ou nervures du plancher 7.

Dans la variante d'exécution illustrée sur les figures 3 et 4 le lest est constitué par des blocs de béton moulé 13 qui sont espacés les uns des autres dans le sens longitudinal. Chacun de ces blocs 13 a une forme sensiblement parallélépipédique et présente dans sa partie centrale un trou 14 percé de part en part. Une barre de préhension 15 s'étend en travers de ce trou 14, à sa partie supérieure, ses extrémités étant prises dans le béton. Cette barre est destinée à faciliter la manipulation des blocs 13.

Chaque bloc 13 prend appui, à sa partie inférieure, sur les bords supérieurs de deux ailes 2a, 3a qui font partie intégrante des parois verticales et longitudinales 2, 3 et qui sont recourbées vers l'intérieur et vers le haut. De préférence chaque bloc 13 présente dans sa face inférieure deux rainure 13a qui viennent coiffer les ailes correspondantes 2a et 3a, comme on peut le voir sur la figure 3.

Dans l'exemple illustré sur la figure 4, l'ensemble du lest est constitué par trois blocs 13 distants les uns des autres à savoir un bloc à chaque extrémité et un bloc au centre. Le plancher 7 qui est constitué par une tôle plane ou de préférence ondulée, repose ainsi sur les blocs 13 et est soutenu par ceux-ci.

On voit sur la figure 3 que le poids des divers blocs 13 est reporté sur les bords supérieurs des ailes 2a et 3a, ce qui tend, d'une part, à appliquer fermement l'ensemble du coffre sur le sol et d'autre part, à faire pivoter l'une en direction de l'autre, les parois verticales et longitudinales 2 et 3, contribuant ainsi à augmenter la rigidité de l'ensemble.

4

Dans la variante d'exécution illustrée sur la figure 5, les blocs 13 sont remplacés par un bac métallique 16 dont le fond présente, à proximité de ses côtés longitudinaux, deux rainures longitudinales 16a venant coiffer les ailes 2a, 3a des deux parois 2 et 3. Le lest est constitué par une masse pesante 17 qui remplit le bac 16. Cette masse peut être formée de sable, de terre, de gravier etc. Le bac 16 est rempli de manière telle que la masse pesante affleure son bord supérieur et serve ainsi de support au plancher supérieur 7.

Dans toutes les formes d'exécution de l'invention qui viennent d'être décrites, le lest est placé dans le compartiment inférieur 9 avant la mise en place par-dessus lui du plancher 7 et enfin du couvercle supérieur 1. Le couvercle peut être assemblé aux parois verticales de diverses façons. La figure 6 illustre un mode d'assemblage particulièrement avantageux. Dans ce cas, la paroi verticale 2 présente, à sa partie supérieure, une aile 2b qui est repliée vers le bas et vers l'extérieur. Par ailleurs, le couvercle 1 comporte le long de ses bords longitudinaux, une aile 1a repliée à l'équerre vers le bas et qui est elle-même prolongée à son extrémité par une autre aile 1b de plus courte hauteur et qui est repliée vers l'intérieur et vers le haut. L'assemblage comporte par ailleurs une patte 18 en forme de Z laquelle comporte une aile inférieure 18a s'étendant vers le bas, contre la surface interne de la partie supérieure de la paroi verticale 2, une aile intermédiaire horizontale 18b en appui sur le bord supérieur arrondi formé entre la paroi 2 et l'aile extérieure 2b s'étendant vers le bas et une aile supérieure 18c s'étendant vers le haut à l'équerre à partir de l'aile intermédiaire 18b et décalée vers l'extérieur. La liaison de ces divers éléments est réalisée au moyen d'une vis autoforeuse 19 dont la tige filetée traverse successivement, de l'intérieur vers l'extérieur, des trous percés dans l'aile 18a, la paroi 2, l'aile 1b, l'aile 2b.

La mise en place du couvercle s'effectue de la façon suivante : le couvercle 1 est d'abord appliqué en position basse sur le bord supérieur arrondi de la paroi 2, la patte 18 n'étant pas mise en place. Dans cette position, l'aile 1b se trouve située en totalité en dessous du bord inférieur de l'aile 2b si bien qu'elle vient se placer en dessous du U inversé formé par l'aile 2b et la partie supérieure de la paroi 2. On met ensuite en place la patte 18, en pénétrant à l'intérieur du coffre. Ceci entraîne le soulèvement préalable du couvercle 1 après quoi on engage la vis 19 comme il est illustré sur la figure 6, ce qui assure l'assemblage des divers éléments et le maintien du couvercle 1 en position haute. Ce dispositif assure pratiquement une inviolabilité totale du couvercle 1 car le démontage ne peut s'effectuer qu'une fois le coffre ouvert puisque c'est seulement dans ce cas que l'on peut avoir accès à la tête de la vis 19.

REVENDICATIONS

1.- Coffre pour la protection d'objets de taille importante, tels que des engins de plein air, cycles, motocycles, planche à voile, etc..., comportant sur sa face antérieure, une porte donnant accès à l'intérieur du coffre et, à sa partie inférieure, un plancher sur lequel reposent le ou les objets devant être protégés, caractérisé en ce qu'il comprend en outre, sous le plancher (7), un compartiment (9) dans lequel est logée une masse pesante (11) dont le poids est reporté sur les parois du coffre, pour augmenter considérablement le poids total du coffre et empêcher toute manutention aisée de celui-ci.

2.- Coffre suivant la revendication 1, caractérisé en ce que le plancher (7) est constitué par une tôle amovible reposant librement sur un support inférieur.

3.- Coffre suivant la revendication 2, caractérisé en ce que le support de la tôle formant le plancher (7) est constitué par des appuis latéraux (8) solidaires des parois longitudinales et verticales (2), (3).

4.- Coffre suivant la revendication 2, caractérisé en ce que la tôle constituant le plancher (7) repose simplement sur la masse pesante (11), (13), (17) logée dans le compartiment inférieur (9).

5.- Coffre suivant l'une quelconque des revendications 1 à 4, caractérisé en ce que la tôle (7) présente sur sa face supérieure des rainures longitudinales.

6.- Coffre suivant l'une quelconque des revendications 1 à 5, caractérisé en ce que la masse pesante (11) est constituée par des sacs contenant une matière pondérale.

7.- Coffre suivant l'une quelconque des revendications 1 à 5, caractérisé en ce que la masse pesante est constituée par plusieurs blocs (13) prenant appui, à leur partie inférieure, sur les bords supérieurs de deux ailes (2a), (3a) faisant partie intégrante des parois verticales et longitudinales (2), (3) et recourbées vers l'intérieur et vers le haut.

8.- Coffre suivant la revendication 7, caractérisé en ce que chaque bloc (13), réalisé en béton moulé, est percé de part en part d'un trou (14) et une barre de préhension (15) s'étend en travers de la partie supérieure du trou (14), les extrémités de cette barre étant prises dans le béton.

9.- Coffre suivant l'une quelconque des revendications 7 et 8, caractérisé en ce que chaque bloc (13) présente, dans sa face inférieure, deux rainures (13a) qui viennent coiffer les ailes correspondantes (2a) et (3a) des parois verticales et longitudinales (2), (3).

10.- Coffre suivant l'une quelconque des revendications 1 à 5, caractérisé en ce qu'il comporte, dans le compartiment inférieur (9), un bac (16) rempli d'une masse pesante constituée de sable, de terre, de graviers, et prenant appui, par sa face inférieure, sur les bords supérieurs de deux ailes (2a), (3a), recourbées vers le haut et vers l'intérieur, des deux parois longitudinales et verticales (2) et (3).

11.- Coffre suivant l'une quelconque des revendications 1 à 10, caractérisé en ce que chacune des parois verticales et longitudinales (2), (3) présente, à sa partie supérieure, une aile (2b) repliée vers le bas et vers l'extérieur, le couvercle (1) comporte le long de ses bords longitudinaux une aile ($1_a$) repliée à l'équerre vers le bas et qui est elle-même prolongée à son extrémité par une autre aile (1b), de plus courte hauteur, et qui est repliée vers l'intérieur et vers le haut, et le dispositif d'assemblage du couvercle (1) et des parois verticales comporte une patte (18) en forme de Z laquelle comporte une aile inférieure (18a) s'étendant vers le bas, contre la surface interne de la partie supérieure de la paroi verticale (2), une aile intermédiaire horizontale (18b) en appui sur le bord supérieur formé entre la paroi verticale (2) et l'aile extérieure (2b) s'étendant vers le bas, et une aile supérieure (18c) s'étendant vers le haut à l'équerre à partir de l'aile intermédiaire (18b) et décalée vers l'extérieur, la liaison de ces divers éléments étant réalisée au moyen d'une vis auto-foreuse (19) dont la tige filetée traverse successivement, de l'intérieur vers l'extérieur, des trous percés dans l'aile (18a) de la patte (18), la paroi (2), l'aile (1b) du couvercle (1) et l'aile (2b) de la paroi (2).

Fig.1

Fig.2

Fig.3

Fig.4

Fig.5

Fig.6

Office européen
des brevets

**RAPPORT DE RECHERCHE EUROPEENNE**

Numéro de la demande

EP 81 40 0523

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| | FR - A - 902 137 (UFNOWSKI) <br> * Figures 1-3; résumé * <br><br> -- | 1,5 | E 04 H 6/00 |
| D | FR - A - 2 396 704 (COCHART) <br> * Figures 1-7; page 2, lignes 30-40; page 3 * <br><br> -- | 1,5 | |
| | FR - A - 2 424 389 (LEFEVRE) <br> * Figures 1-4; page 3, lignes 36-40; pages 4-7 * <br><br> -- | 1 | DOMAINES TECHNIQUES RECHERCHES (Int. Cl.³) |
| | CH - A - 305 988 (CHRISTINGER) <br> * Figures 1,2; page 1 * <br><br> -- | 1 | E 04 H <br> B 62 H |
| | CH - A - 185 078 (ZOLLINGER) <br> * Figures 1-3; pages 1 et 2 * <br><br> -- | 1,5 | |
| | US - A - 4 156 994 (STEUER) <br> * Figure 1; colonne 2, lignes 1-55 * <br><br> ---- | 1,11 | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 02-07-1981 | VANNESTE |

OEB Form 1503.1   06.78